(19) Europäisches Patentamt / European Patent Office / Office européen des brevets

(11) EP 4 227 326 A1

(12) EUROPEAN PATENT APPLICATION
published in accordance with Art. 153(4) EPC

(43) Date of publication:
16.08.2023 Bulletin 2023/33

(21) Application number: 21877574.0

(22) Date of filing: 04.10.2021

(51) International Patent Classification (IPC):
C08F 6/16 $^{(2006.01)}$     C08F 220/10 $^{(2006.01)}$

(52) Cooperative Patent Classification (CPC):
C08F 6/16; C08F 220/10; Y02A 50/20

(86) International application number:
PCT/JP2021/036678

(87) International publication number:
WO 2022/075275 (14.04.2022 Gazette 2022/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.10.2020 JP 2020171389

(71) Applicant: Toagosei Co., Ltd.
Minato-ku
Tokyo 105-8419 (JP)

(72) Inventors:
• SHIBATA, Hiroyuki
Nagoya-shi, Aichi 455-0026 (JP)
• TERADA, Masaru
Nagoya-shi, Aichi 455-0026 (JP)

(74) Representative: TBK
Bavariaring 4-6
80336 München (DE)

(54) **METHOD OF PRODUCING LOW-ODOR EMULSION**

(57) Provided is a method of producing a low-odor emulsion including the steps of: charging an aqueous polymer emulsion into a treatment vessel, in which pressure can be reduced, and supplying pressurized water vapor into the treatment vessel through a supply passage, while maintaining the inside of the treatment vessel in a state where water is boiled by bringing temperature of the aqueous polymer emulsion into a range of 50°C to 90°C and pressure in the treatment vessel into 12 KPa to 57 KPa; and discharging water vapor in a gas phase part in the treatment vessel and a volatile organic compound volatilized from the aqueous polymer emulsion to outside of a system. A ratio of an inner diameter of the treatment vessel to an opening diameter of a supply opening for supplying the pressurized water vapor from the supply passage into the treatment vessel is from 30 to 3000 for the inner diameter of the treatment vessel relative to 1 for the opening diameter of the supply opening.

FIG. 1

**Description**

Cross Reference to Related Application

This application is based on Japanese Patent No. 2020-171389, filed on Oct. 9, 2020, the content of which is hereby incorporated by reference.

Technical Field

The present disclosure relates to a method of producing a low-odor emulsion and in particular, to a technique for efficiently removing a volatile organic compound from an aqueous polymer emulsion obtained by an emulsion polymerization method or the like.

Background Art

Aqueous polymer emulsions obtained by emulsion polymerization of monomers such as styrene, vinyl acetate, acrylonitrile, butadiene, and alkyl (meth)acrylate in an aqueous medium are widely used as raw materials for rubber-like elastic materials, paints, coating agents, adhesives, pressure-sensitive adhesives, binders, thickeners, cosmetic compositions, pharmaceutical compositions, and the like.

An aqueous polymer emulsion (hereinafter, also simply referred to as an "emulsion") usually contains a trace amount of a volatile organic compound containing, as a main component, an unreacted monomer or a decomposition product generated during polymerization. There is a concern that such a volatile organic compound generates a bad odor or affects the workability of a worker who handles the volatile organic compound.

A method of removing the volatile organic compound in the emulsion is to blow pressurized water vapor into the emulsion to expel the volatile organic compound along with the water vapor (see, for example, Patent Literature 1). Other methods proposed include a method of adding a redox initiator after polymerization to perform additional polymerization (see, for example, Patent Literature 2), a method of supplying pressurized water vapor from below while supplying an emulsion from the upper part of a tray column stripper (see, for example, Patent Literature 3), and a method of blowing air or an inert gas into a heated emulsion (see, for example, Patent Literature 4).

Citation List

Patent Literature

Patent Literature 1: Japanese Patent Laid-Open No. 2002-60415
Patent Literature 2: Japanese Patent Laid-Open No. 2002-212207
Patent Literature 3: Japanese Patent Laid-Open No. 58-213003
Patent Literature 4: Japanese Patent Laid-Open No. 53-41387

Summary of Invention

Technical Problem

Since an emulsion is subjected to a thermal history at a high temperature for a long time in Patent Literatures 1 to 4, there is a concern that agglomerates of polymer particles are likely to be generated. In addition, a large amount of the generated agglomerates of the polymer particles adheres to the wall surface in a treatment vessel, the shaft of an agitator, or the like, and thus the function of controlling the temperature in the treatment vessel may be deteriorated. Such agglomerates may be present in the emulsion in a microscopic form, in addition to adhering to the wall surface of the treatment vessel or the like. Much labor and time are required to remove the agglomerates from the emulsion, and there is a concern that disadvantages such as a decrease in productivity may occur when production is performed on an industrial scale. Furthermore, there is a concern over insufficient quality, as the temporal stability of the emulsion may decrease, and a precipitate may form on the bottom of the vessel during long-term storage.

The present disclosure has been made in view of the above problems, and a main object thereof is to provide a method of producing a low-odor emulsion in which the amount of agglomerates generated during deodorization treatment can be suppressed to a low level, the temporal stability is good, and the volatile organic compound in the emulsion is sufficiently reduced.

Solution to Problem

As a result of intensive studies to solve the above problems, the present inventors have found that when a ratio of an inner diameter of a treatment vessel to an opening diameter of a supply opening for supplying pressurized water vapor into the treatment vessel is set in a specific range, the thermal history of an aqueous polymer emulsion can be reduced, and a volatile organic compound can be easily removed in a short time.

In other words, the first configuration of the present disclosure relates to a method of producing a low-odor emulsion, the method including the steps of: charging an aqueous polymer emulsion into a treatment vessel, in which pressure can be reduced, and supplying pressurized water vapor into the treatment vessel through a supply passage, while maintaining the inside of the treatment vessel in a state where water is boiled by bringing temperature of the aqueous polymer emulsion into a range of 50°C to 90°C and pressure in the treatment vessel into 12 KPa to 57 KPa; and discharging water vapor in a gas phase part in the treatment vessel and a volatile organic compound volatilized from the aqueous polymer emulsion to outside of a system, in which a ratio of an inner diameter of the treatment vessel to an opening diameter of a supply opening for supplying the pressurized water vapor from the supply passage into the treatment vessel is from 30 to 3000 for the inner diameter of the treatment vessel relative to 1 for the opening diameter of the supply opening.

Advantageous Effects of Invention

According to the present disclosure, an aqueous polymer emulsion with sufficiently reduced volatile organic compounds can be produced in a short treatment time (for example, within 10 hours) using a general-purpose apparatus in which pressure can be reduced. Therefore, the aqueous polymer emulsion obtained by the method of the present disclosure has a low odor and a small amount of agglomerates and thus is excellent in terms of environment, safety, and hygiene. Since the amount of agglomerates generated during deodorization treatment can be suppressed to a low level, the aqueous polymer emulsion is excellent not only in terms of quality but also in terms of productivity and production cost. Furthermore, the aqueous polymer emulsion produced by the method of the present disclosure has excellent temporal stability so that defects are unlikely to occur even after long-term storage and can be used safely.

Brief Description of Drawings

[Figure 1] Figure 1 is a vertical cross-sectional view showing a schematic configuration of a batch-type deodorizing apparatus.
[Figure 2] Figure 2 is a vertical cross-sectional view showing a schematic configuration of a continuous deodorizing apparatus.
[Figure 3] Figure 3 is a cross-sectional view of an end portion of a supply pipe on the supply opening side.
[Figure 4] Figure 4 is a cross-sectional view of an end portion of a supply pipe on the supply opening side.

Description of Embodiments

Hereinafter, the present disclosure will be described in detail. As used herein, the term "(meth)acrylic" means acrylic or methacrylic. The term "aqueous polymer emulsion" means an emulsion obtained by dispersing a polymer in a water-based solvent. The term "water-based solvent" means a liquid containing 70% by mass or more and preferably 80% by mass or more of water relative to the total solvent content.

<<Method of Producing Low-odor Emulsion>>

The method of producing a low-odor emulsion of the present disclosure (hereinafter, also referred to as "this production method") is to produce a low-odor aqueous polymer emulsion (hereinafter, also referred to as "low-odor emulsion") by performing a treatment for removing a volatile organic compound contained in an aqueous polymer emulsion (deodorization treatment). The production method includes the following step A and step B.

Step A: a step of charging a deodorization treatment vessel, in which pressure can be reduced, with an emulsion, and supplying pressurized water vapor to the emulsion under reduced pressure.
Step B: a step of discharging water vapor in a gas phase part in the deodorization treatment vessel and a volatile organic compound volatilized from the emulsion to the outside of a system.

In this production method, the timing of performing the step B is not particularly limited as long as the water vapor in the gas phase part in the deodorization treatment vessel and the volatile organic compound volatilized from the emulsion can be discharged to the outside of the system. In other words, this production method may be an embodiment in which the step B is performed after the step A is performed or in which the step A and the step B are performed at the same time.

This production method may be applied to a batch or continuous type. In the case of applying this production method to a batch type, a low-odor emulsion can be produced by a method including the step A and the step B above. In the case of applying this production method to a continuous type, it is preferable to produce a low-odor emulsion by a method including the following step C in addition to the step A and step B above.

Step C: a step of extracting, from the deodorization treatment vessel, the emulsion in which the volatile organic compound has been removed by the above step B and supplying an undeodorized emulsion to the deodorization treatment vessel at a rate equal to the rate at which the emulsion is extracted from the deodorization treatment vessel.

Hereinafter, the present production method will be described.

<Aqueous Polymer Emulsion>

The emulsion subject to removal of the volatile organic compound is preferably an emulsion containing polymer particles produced by emulsion polymerization in an aqueous medium. Vinyl monomers may be preferably used as monomers constituting the polymer particles. Examples of the vinyl monomers include (meth)acrylic acid ester compounds, aromatic vinyl compounds, unsaturated carboxylic acids, unsaturated acid anhydrides, hydroxy group-containing vinyl compounds, amino group-containing vinyl compounds, amide group-containing vinyl compounds, alkoxy group-containing vinyl compounds, nitrile group-containing vinyl compounds, vinyl ether compounds, sulfonic acid group-containing vinyl compounds, and polyoxyalkylene group-containing vinyl compounds. As the vinyl monomer, one of these may be used alone, or two or more thereof may be used in combination.

The emulsion polymerization to produce an emulsion can be performed according to a conventionally known method. The emulsion polymerization is preferably performed in the presence of at least one of a surfactant and a protective colloid. Examples of the ionic species of the surfactant include an anion, a cation, and a nonionic, and an anion and/or a nonionic is more preferred. It is preferable to use a radical polymerization initiator for emulsion polymerization. As the radical polymerization initiator, a known oil-soluble polymerization initiator or water-soluble polymerization initiator can be used. Preferred is a water-soluble polymerization initiator.

For the emulsion produced by emulsion polymerization in an aqueous medium, the aqueous medium after polymerization usually contains about 1000 to 3000 ppm of volatile organic compounds. The volatile organic compounds include an unreacted monomer, alcohol generated by hydrolysis from an unreacted monomer, alcohol generated by hydrolysis from an ester bond in a copolymer, and an impurity contained in the monomer or an emulsifier. To suppress an odor derived from such a volatile organic compound, the step A and the step B are performed in this production method to remove the volatile organic compound from the emulsion.

<Step A: Supply of Pressurized Water Vapor>

In the step A, an emulsion to be deodorized is charged into a deodorization treatment vessel, in which pressure can be reduced, and pressurized water vapor is supplied under reduced pressure to the emulsion in the deodorization treatment vessel, whereby a volatile organic compound contained in the emulsion is volatilized and transferred from a liquid phase part to a gas phase part. The deodorization treatment vessel (hereinafter, also simply referred to as "treatment vessel") is a treatment tank in which an emulsion to be deodorized is stored, and the inside thereof has a storing portion that stores the emulsion. The size and shape of the storing portion are not particularly limited. Examples of the shape of the storing portion include a cylindrical shape and a rectangular shape in cross section. The treatment vessel is provided with a supply pipe for supplying pressurized water vapor into the treatment vessel (hereinafter also referred to as "water vapor supply pipe" or simply as "supply pipe").

The treatment vessel may be further provided with a heating portion for heating the emulsion in the vessel, an agitator for stirring the emulsion in the vessel, a thermometer (for example, a thermocouple) for measuring the temperature in the vessel (i.e., the emulsion temperature), a pressure gauge for measuring the pressure in the gas phase part in the vessel, an exhaust pump for evacuating the gas phase in the vessel. From the viewpoint of efficiently releasing volatile organic compounds from the emulsion (more specifically, from the aqueous medium), it is preferred that the emulsion be uniformly stirred in the tank during the deodorization treatment. For this reason, it is preferable to use an agitator with a stirring blade suitable for stirring, such as a three-retreat blade, a paddle blade, a propeller blade, an anchor blade and a large blade. Examples of the large blade include FULLZONE (manufactured by KOBELCO ECO-SOLUTIONS), MAXBLEND (manufactured by Sumitomo Heavy Industries Process Equipment Co., Ltd.), and BENDLEAF impeller (manufactured by GL HAKKO Co., Ltd.). The size of the stirring blade is not particularly limited, but from the viewpoint of sufficiently performing stirring, the size of the blade diameter of the stirring blade relative to 1 for the inner diameter of the treatment vessel is preferably 0.3 or more and more preferably 0.4 or more.

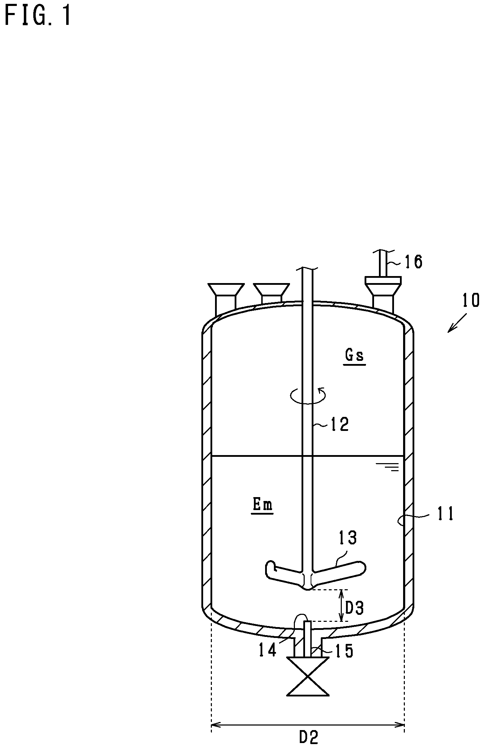

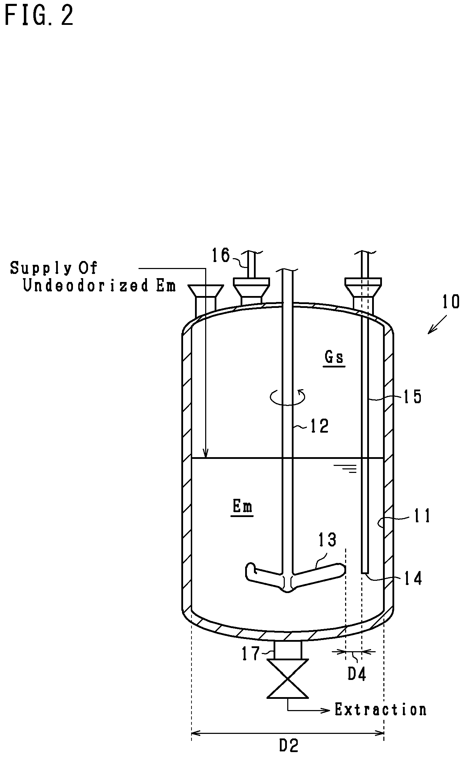

Figures 1 and 2 each show a schematic configuration view of the treatment vessel. Figure 1 shows a batch type, and Figure 2 shows a continuous type. As shown in Figures 1 and 2, a treatment vessel 10 is a bottomed vessel with a storing portion 11 provided inside. In the treatment vessel 10, an undeodorized emulsion Em is stored in the lower part of the storing portion 11, and deodorization treatment of the emulsion Em is performed in a state where a gas phase part Gs is formed in the upper part of the storing portion 11. The storing portion 11 is provided with an agitator 12. The agitator 12 is arranged in the storing portion 11 such that a stirring blade 13 on the lower end of the agitator shaft is positioned at the bottom of the storing portion 11. The treatment vessel 10 shown in Figures 1 and 2 is provided with the agitator 12 having a three-retreat blade as the stirring blade 13.

The treatment vessel 10 is provided with a supply pipe 15 for supplying pressurized water vapor into the storing portion 11 from a supply opening 14. In the treatment vessel 10 in Figure 1, supply pipe 15 is inserted from the bottom of the treatment vessel 10 to the storing portion 11. In the treatment vessel 10 in Figure 2, supply pipe 15 is inserted from the upper part of the treatment vessel 10 to the storing portion 11. The upper part of the treatment vessel 10 is provided with an exhaust pipe 16 for discharging gas in the gas phase part Gs in the upper part of the storing portion 11 to the outside of a system. The continuous-type treatment vessel 10 is further provided with an extraction hole 17 at the bottom of the treatment vessel 10 for extracting the emulsion from the storing portion 11 after deodorization treatment.

While the use of an agitator may enhance contact efficiency between the emulsion and pressurized water vapor in the treatment vessel and increase the removal effect of volatile organic compounds, excessive agitation is considered to easily lead to foaming. Therefore, an appropriate amount of defoaming agent may be used to control foaming. During deodorization treatment, if necessary, the emulsion may be further extracted from a liquid phase part (i.e., the lower part of the treatment vessel) to the outside of the system, and the extracted emulsion may be circulated with a circulation pump and flushed from the gas phase part in the treatment vessel (i.e., the upper part of the treatment vessel).

When pressurized water vapor is supplied to the emulsion stored in the treatment vessel, volatile organic compounds in the emulsion are separated from the liquid phase part to be contained in the gas phase part. As pressurized water vapor to be supplied into the treatment vessel, it is preferable to use water vapor with a gauge pressure of 0.05 to 0.50 MPa (temperature: 110 to 160°C), more preferable to use water vapor with a gauge pressure of 0.05 to 0.30 MPa, and even more preferable to use water vapor with a gauge pressure of 0.10 to 0.30 MPa.

When supplying pressurized water vapor into the treatment vessel, the pressurized water vapor may be supplied directly into the emulsion in the treatment vessel. Alternatively, the pressurized water vapor may be supplied indirectly to the emulsion in the treatment vessel by supplying the pressurized water vapor to the gas phase part in the treatment vessel. Of these, supplying pressurized water vapor directly into the emulsion stored in the treatment vessel is preferred, supplying pressurized water vapor directly from the bottom of the treatment vessel into the emulsion in the treatment vessel is more preferred, and supplying pressurized water vapor directly from the bottom of the treatment vessel in the vicinity of the stirring blade into the emulsion in the treatment vessel is even more preferred. According to the technique of supplying pressurized water vapor directly into the emulsion, the thermal history to the emulsion can be further reduced, and the volatile organic compounds in the emulsion can be efficiently removed while suppressing the destruction of polymer particles.

In the step A, the temperature of the emulsion in the treatment vessel is maintained within a predetermined temperature range to ensure that volatile organic compounds are sufficiently removed from the emulsion. Although a method of maintaining the emulsion in the treatment vessel at a temperature within a predetermined range is not particularly limited, it is preferable to heat the emulsion to be deodorized in terms of simple and highly accurate temperature control. This heat treatment can be performed using a heating jacket or a heat exchanger provided outside the treatment vessel, or the like. If necessary, the emulsion may be preheated by batch processing using a heat treatment vessel or continuous processing by line heating using a heat exchanger before supplying the emulsion into the treatment vessel.

During the period when pressurized water vapor is supplied into the treatment vessel, the temperature of the emulsion in the treatment vessel (i.e., the temperature in the vessel) is adjusted so that the temperature of the emulsion in the treatment vessel is in the range of 50 to 90°C. If the emulsion temperature exceeds 90°C, a relatively large amount of polymer film tends to form on the walls of the vessel, especially at the interface of the gas-liquid phase, and the temperature in the vessel becomes uneven, resulting in less accurate temperature control. In addition, an ester bond in a polymer or an unreacted monomer tends to hydrolyze to form a new alcohol, resulting in a tendency to take a long time to remove volatile organic compounds from the emulsion. If the temperature in the vessel is less than 50°C, the removal rate of volatile organic compounds slows, resulting in lower productivity. The temperature in the vessel is preferably 50 to 85°C and more preferably 50 to 80°C.

In this step, the emulsion temperature and the pressure in the treatment vessel are controlled so that the inside of the treatment vessel (more specifically, the gas phase part in the treatment vessel) is at saturated water vapor pressure, i.e., the water in the treatment vessel is boiling, at the above emulsion temperature. Specifically, the pressure of the gas phase part in the treatment vessel is in the range of 12 KPa (90 mmHg) to 57 KPa (430 mmHg) during the deodorization treatment. The pressure in the vessel is preferably 12 KPa (90 mmHg) to 40 KPa (300 mmHg) and more preferably 12 KPa (90 mmHg) to 30 KPa (225 mmHg) because the emulsion temperature during the deodorization treatment can be set to a lower temperature and thus the generation of agglomerates of polymer particles can be suppressed to a low level.

<Step B: Discharge of Volatile Organic Compound and Water Vapor out of System>

In the step B, the gas in the treatment vessel is discharged to the outside of the system after the pressurized water vapor is supplied into the treatment vessel in the step A and/or at the same time as the pressurized water vapor is supplied into the treatment vessel, whereby the pressure in the system is reduced to maintain the pressure in the system within a predetermined range. Specifically, after and/or at the same time as supplying pressurized water vapor into the treatment vessel, volatile organic compounds decomposed by the supply of the pressurized water vapor and water vapor in an amount equal to the amount of water vapor supplied into the treatment vessel are discharged to the outside of the system. The method of discharging treatment is not particularly limited, but it is preferable to install an exhaust pump in the treatment vessel and use the exhaust pump and more preferable to reduce the pressure by evacuating from the upper part of the treatment vessel through an exhaust pipe 16 with the exhaust pump. Further, a condenser may be provided at a position intermediate between the treatment vessel and the exhaust pump, and the gas may be condensed and removed by the condenser.

In this production method, in the step A, pressurized water vapor is supplied to the emulsion in the treatment vessel, while in the step B, the volatile organic compound and water vapor in an amount equal to the amount of water vapor supplied into the treatment vessel are discharged to the outside of the system. The amount of the pressurized water vapor to be supplied into the treatment vessel is preferably an amount such that the amount of the pressurized water vapor is from 5 to 100 parts by mass, more preferably from 5 to 90 parts by mass, and even more preferably from 15 to 70 parts by mass, per 100 parts by mass of the emulsion. When the amount of the pressurized water vapor is within the above range, the thermal history applied to the emulsion can be suppressed, and thus the destabilization of the emulsion can be suppressed. In addition, the removal efficiency of volatile organic compounds can be sufficiently increased.

In the case of a batch type, the time for the deodorization treatment of the emulsion by the step A and the step B varies depending on the feed rate of pressurized water vapor and other conditions, but is preferably 10 hours or less from the viewpoint of productivity, and is more preferably 1 to 8 hours, and even more preferably 2 to 6 hours from the viewpoint of productivity and low odor.

<Step C: Extraction and Supply of Emulsion>

In the step C, the emulsion from which the volatile organic compound has been removed in the step A and the step B is continuously extracted from the treatment vessel to another vessel (for example, a tank), and at the same time, or before or after the extraction, the undeodorized emulsion is supplied at a rate equal to the rate at which the emulsion after the deodorization treatment is continuously extracted from the deodorization treatment vessel. As a result, a certain amount of emulsion is present in the treatment vessel in a steady state.

In the case of a continuous type, the mean residence time of the emulsion in the treatment vessel can be appropriately selected by selecting the feed rate with respect to the internal volume of the treatment vessel. The residence time of the emulsion is preferably 10 hours or less, and from the viewpoint of productivity and low odor, more preferably 1 to 8 hours, and even more preferably 2 to 6 hours. A sufficiently long residence time (for example, 1 hour or more) is preferred since the volatile organic compound can be sufficiently removed.

It is preferable to maintain the temperature of the emulsion in the treatment vessel within a predetermined temperature range to ensure that volatile organic compounds are sufficiently removed from the emulsion. Therefore, when the temperature of the emulsion in the treatment vessel is lowered by supplying the undeodorized emulsion to the treatment vessel, it is preferable to preheat the undeodorized emulsion. Examples of this heat treatment method include batch processing using a heat treatment vessel and continuous processing by line heating using a heat exchanger.

If necessary, the emulsion may be neutralized to an appropriate pH range before and/or during the deodorization treatment. The pH range is preferably 5 to 10, more preferably 6 to 10, even more preferably 6.5 to 9.5, and still more preferably 7 to 9. When the pH is 10 or less, it is possible to prevent alcohol from being newly generated due to hydrolysis of an ester bond of the polymer or the unreacted monomer and to shorten the time required for the removal of the volatile organic compounds in the emulsion. On the other hand, when the pH is 5 or more, the generation of agglomerates of polymer particles can be suppressed, thereby improving the productivity. In addition, the temporal stability of the emulsion can be ensured, thereby keeping the quality of the emulsion good.

Examples of the basic compound used for neutralization include ammonia; alkylamines such as trimethylamine, triethylamine, and butylamine; ether amines such as 2-dimethylaminoethanol, diethylaminoethanol, diethanolamine, triethanolamine, triisopropanolamine, 2-amino-2-methyl-1-propanol, 2-amino-2-methyl-1,3-propanediol, and morpholine; and metal hydroxides such as potassium hydroxide and sodium hydroxide. Examples of the method of adjusting the pH of the emulsion (specifically, addition of the basic compound) include a method of adding the basic compound before the deodorization treatment, a method of dividedly adding the basic compound during the deodorization treatment, and a method of continuously adding the basic compound during the deodorization treatment.

<Supply of Pressurized Water Vapor>

Next, an embodiment in which pressurized water vapor is supplied into the treatment vessel will be described with reference to Figures 1 to 4.

The supply pipe 15 has a supply passage as a passage through which pressurized water vapor flows, and is connected to the treatment vessel 10 such that the supply passage and the inside of the treatment vessel 10 (i.e., the storing portion 11) are communicated with each other (see Figures 1 and 2). The shape, material, and the like of the supply pipe 15 are not particularly limited as long as the supply pipe 15 can supply pressurized water vapor into the treatment vessel 10. The supply pipe 15 is, for example, a pipe made of resin or metal.

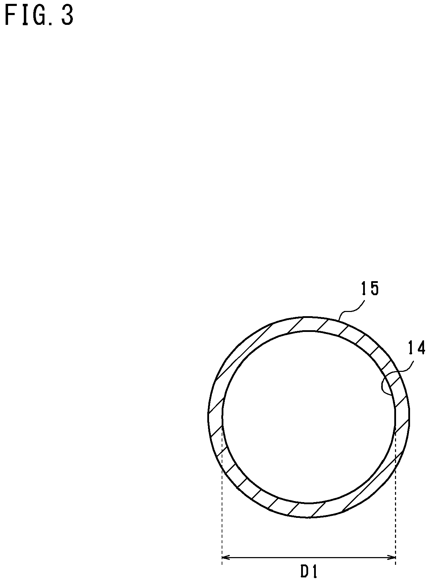

The supply pipe 15 is provided with the supply opening 14 for supplying pressurized water vapor from a supply passage in the supply pipe 15 into the treatment vessel 10 at the tip thereof. The shape and the number of the supply opening 14 are not particularly limited. Examples of the shape of the supply opening 14 include a rectangular shape, a circular shape, an elliptical shape, and a star shape. One embodiment of the supply opening 14 is an embodiment in which an opening portion of a pipe as the supply pipe 15 constitutes the supply opening 14 as shown in Figure 3. In this case, the supply opening 14 has an opening diameter corresponding to the pipe diameter of the pipe.

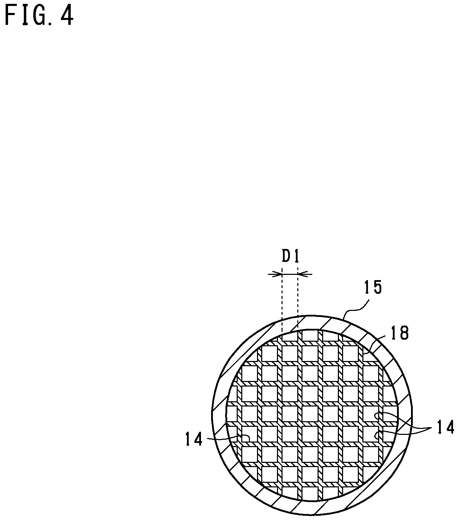

In addition, as another embodiment of the supply opening 14, as shown in Figure 4, there is a configuration in which a porous member having a large number of holes (for example, a wire gauze, a flat plate with a large number of through holes provided in the thickness direction, or the like) is positioned in the supply passage, and thus a large number of supply openings 14 are provided in the supply passage. In this case, each hole of the wire gauze and the flat plate corresponds to one supply opening 14. Figure 4 shows a case where a wire gauze 18 is arranged as a multiple member in the opening of the supply pipe 15. In the supply pipe 15, the end on the side where the supply opening 14 is provided may be enlarged or reduced in diameter toward the supply opening 14.

In the treatment vessel 10, a position where the supply opening 14 is arranged is not particularly limited, and the supply opening 14 may be arranged at least on any of a side wall portion, a ceiling portion, the bottom, or the like of the treatment vessel 10. From the viewpoint of directly supplying the pressurized water vapor to the emulsion in the treatment vessel 10 to thereby efficiently bringing the volatile organic compound in the emulsion into contact with the pressurized water vapor, the supply opening 14 is preferably arranged at least at the bottom of the treatment vessel 10.

When an agitator 12 is provided inside the treatment vessel 10, it is preferable that the supply opening 14 is arranged in the vicinity of a stirring blade 13. In particular, an embodiment in which the agitator 12 is provided so that the stirring blade 13 is positioned at the bottom of the treatment vessel 10, the supply opening 14 is provided at the bottom of the treatment vessel and in the vicinity of the stirring blade 13, and pressurized water vapor is directly supplied into the emulsion from the bottom of the treatment vessel 10 is preferred because the volatile organic compound in the emulsion can be efficiently brought into contact with the pressurized water vapor. From the above viewpoint, when a blade radius of the stirring blade 13 is d1 [m], the position of the supply opening 14 with respect to the stirring blade 13 from the surface (outer edge) of the stirring blade 13 is preferably 0.5 x d1 [m] or less, more preferably 0.4 x d1 [m] or less, and even more preferably $0.3 \times$ d1 [m] or less. In addition, the supply opening 14 is preferably arranged at the same height position as the upper end portion of the stirring blade 13 or below the upper end portion of the stirring blade 13, and more preferably arranged below the upper end portion of the stirring blade 13.

In a case where the material of the supply pipe 15 is a metal, the surface temperature of the supply pipe 15 tends to be high, and the emulsion may dry instantaneously to form a film. Therefore, if necessary, the metal portion of the supply pipe 15 may be coated with a resin or the like so that the heat of the supply pipe 15 does not directly contact the emulsion. Examples of the resin include fluororesins such as polytetrafluoroethylene, a tetrafluoroethylene/hexafluoropropylene copolymer, and an ethylene/tetrafluoroethylene copolymer.

The size of the bubble of pressurized water vapor relative to the scale of the treatment vessel 10 can be adjusted by the ratio of the diameter of the supply opening 14 and the inner diameter (tank diameter) of the treatment vessel 10. Here, the inner diameter of the treatment vessel 10 refers to the maximum inner diameter of the storing portion 11 in which the undeodorized emulsion is placed.

The ratio of the inner diameter of the treatment vessel 10 to the opening diameter of the supply opening 14 is determined as follows: The opening diameter of the supply opening 14 is defined as D1 [m] and the inner diameter of the treatment vessel 10 as D2 [m] (see Figures 1 to 4), and a ratio of the inner diameter D2 of the treatment vessel 10 to the opening diameter D1 of the supply opening 14 is defined as "D2/D1". In a case where the supply opening 14 and the treatment vessel 10 each have a circular cross-sectional shape, a diameter of the supply opening 14 is the opening diameter D1 while a diameter of the inside of the treatment vessel 10 (i.e., tank diameter) is the inner diameter D2. On the other hand, regarding the supply opening 14 and the treatment vessel 10 that are not circular in cross section, an equivalent diameter is used as the opening diameter and/or the inner diameter. The equivalent diameter is a value obtained by the following equation (3) when an opening area of the supply opening 14 and a cross-sectional area of the opening of the treatment vessel 10 are defined as S [m$^2$] and circumferential lengths thereof as L [m].

$$\text{Equivalent diameter } [m] = (4 \times S)/L \quad (3)$$

In this production method, the ratio (D2/D1) of the inner diameter D2 of the treatment vessel 10 to the opening diameter D1 of the supply opening 14 is set to from 30 to 3000, whereby the temporal stability of the emulsion can be improved by deodorization treatment using the pressurized water vapor. When the ratio of the inner diameter D2 of the treatment vessel 10 to the opening diameter D1 of the supply opening 14 is less than 30, many agglomerates of polymer particles are generated, resulting in a tendency to cause lower productivity and degradation in quality. In addition, the temporal stability of the emulsion after deodorization treatment decreases, and the quality of the emulsion is likely to deteriorate. On the other hand, when the ratio of the inner diameter D2 of the treatment vessel 10 to the opening diameter D1 of the supply opening 14 exceeds 3000, the liquid surface foams due to excessively fine bubbles of the pressurized water vapor, which tends to make the deodorization treatment difficult. From such a viewpoint, the ratio of the inner diameter D2 of the treatment vessel 10 to the opening diameter D1 of the supply opening 14 is preferably 200 to 3000 and more preferably 350 to 3000.

The configuration for setting the ratio D2/D1 within the above range is not particularly limited. For example, a pipe having a pipe diameter D1 included in the above range of the ratio D2/D1 is used as the supply pipe 15, and the pipe is connected to the treatment vessel 10 as it is without attaching anything to the opening of the pipe (see Figure 3). In this configuration, for example, the diameter of the opening at the tip of the pipe is set to D1 by reducing the diameter of the end of the pipe toward the downstream side, thereby setting the opening diameter of the supply opening 14 to D1. Alternatively, a wire gauze 18 having a mesh size of D1 satisfying the above range of the ratio D2/D1 may be arranged at the tip of the supply pipe 15, and the supply pipe 15 to which the wire gauze 18 is attached may be connected to the treatment vessel 10 (see Figure 4). Of these, preferred is a configuration in which a large number of supply openings 14 are provided in the supply passage, and the pressurized water vapor is supplied into the treatment vessel 10 from the supply passage through the large number of supply openings 14 in terms of the ease of making a design so that the ratio D2/D1 is included in the above range and the capability of efficiently supplying a sufficient amount of pressurized water vapor to the emulsion in a short time.

According to this production method described above, a low-odor aqueous polymer emulsion in which the concentration of volatile organic compounds is preferably 300 ppm or less can be produced by a short-time deodorization treatment of about 1 to 10 hours through selection of various conditions. In the emulsion after the deodorization treatment by this production method, the concentration of the volatile organic compounds is more preferably 100 ppm or less, even more preferably 50 ppm or less, and still more preferably 35 ppm or less, and the closer to 0 ppm is preferable. Note that the concentration of the volatile organic compounds in the emulsion is a value measured by gas chromatography according to the method described in Examples.

In particular, in an aqueous polymer emulsion containing a (meth)acrylic acid ester monomer unit as a constituent monomer, it is sometimes preferable to reduce the odor of an alcohol produced by hydrolysis of an ester bond of a polymer or an unreacted monomer rather than the odor of the unreacted monomer itself. To suppress such an alcohol-derived odor, the concentration of alcohol in the emulsion is preferably 100 ppm or less and more preferably 30 ppm or less, and closer to 0 ppm is preferred.

According to the present disclosure, a low-odor aqueous polymer emulsion having small amounts of volatile organic compounds and agglomerates with excellent temporal stability can be obtained by simple operation using a general-purpose apparatus in which pressure can be reduced. Such an emulsion can be used in a wide range of applications with high environmental, safety, and quality requirements, such as a rubber-like elastic material, a paint, a coating agent, an adhesive, a pressure-sensitive adhesive, a binder, a thickener, a cosmetic composition, and a pharmaceutical composition.

Examples

Hereinafter, the present disclosure will be described in more detail with reference to Examples, but the present disclosure is not limited to these Examples. In the following, "parts" and "%" mean "parts by mass" and "% by mass" respectively, unless otherwise specified.

1. Synthesis of Aqueous Polymer Emulsion

<Production Example 1>

<Emulsion Polymerization>

A flask equipped with an agitator, a thermometer, a condenser, a nitrogen inlet tube, and two dropping funnels was charged with 45 parts of water and 2 parts of a surfactant (trade name: NEOPELEX G-15, sodium dodecylbenzenesulfonate, hereinafter also referred to as "G-15", manufactured by Kao Corporation) and heated to 80°C.

A monomer pre-emulsion was prepared by mixing 35 parts of methyl methacrylate (hereinafter, MMA), 40 parts of n-butyl acrylate (hereinafter, BA), 17 parts of 2-ethylhexyl acrylate (hereinafter, HA), 5 parts of styrene (hereinafter, St), 3 parts of methacrylic acid (hereinafter, MAA), 10 parts of G-15, and 45 parts of water. The resulting monomer pre-emulsion and 20 parts of 5% aqueous ammonium persulfate solution as a polymerization initiator were each continuously added dropwise to the flask from separate dropping funnels over 4 hours, and emulsion polymerization was performed while keeping the solution temperature at about 80°C. After completion of the dropwise addition, the solution was kept at 80°C and aged for another 2 hours. 5 parts of 5% aqueous ammonium persulfate solution were added thereto during aging. Thereafter, the mixture was cooled to 50°C to terminate the polymerization. To the resulting emulsion, 0.1 part of a defoaming agent (trade name: SN-DEFOAMER PC, manufactured by SAN NOPCO LIMITED) to yield an aqueous polymer emulsion (A) having a solid content of 45.0% and a pH of 2.1. The amounts of main volatile organic compounds contained in the resulting aqueous polymer emulsion (A) were measured by gas chromatography, and the results were as follows.

MMA: 211 ppm, BA: 277 ppm, HA: 104 ppm, St: 82 ppm, methanol: 5 ppm, n-butanol: 264 ppm, 2-ethylhexanol: 70 ppm

2. Deodorization Treatment

<Example 1>

A water vapor supply pipe and an exhaust pipe were attached to a cylindrical flask (inner diameter: 120 mm) containing the aqueous polymer emulsion (A) obtained in Production Example 1. The supply pipe was a pipe having a pipe diameter of 1 mm, and in a state where a 100-mesh (mesh size: 0.154 mm) wire gauze was attached to the tip of the pipe, the end of the pipe on the side to which the wire gauze was attached was inserted from the bottom of the flask. A water vapor supply opening was positioned in the vicinity of the stirring blade (at a position below the stirring blade having a blade diameter of 90 mm with a distance D3 of 20 mm from the lower end of the stirring blade, and at a position where the stirring blade and a supply opening for pressurized water vapor (hereinafter also referred to as a "water vapor supply opening") of the water vapor supply pipe overlap when viewed from above to below the stirring blade) (see Figure 1). As the stirring blade, a three-retreat blade was used. Note that the supply opening 14 in Figure 1 corresponds to a water vapor supply opening. The opening diameter of the water vapor supply opening corresponds to the mesh size of the wire gauze, which is 0.154 mm.

After the solution temperature was raised to 55°C, the pH was adjusted to 8.0 with 25% ammonia water under stirring. While pressurized water vapor at a pressure of 0.2 MPa was then blown into the solution through the water vapor supply pipe at a rate of 0.1 part/min per 100 parts of the aqueous polymer emulsion (A), the pressure in the flask was reduced to 15 KPa by evacuating the water vapor in the system through an exhaust pipe using an exhaust pump to keep water in the system boiling. 25% ammonia water was added as appropriate during the deodorization treatment to maintain the pH in the range of 7 to 9. In total, 30 parts of water vapor were supplied by blowing pressurized water vapor over 5 hours.

<Example 2>

The deodorization treatment was performed in the same manner as in Example 1, except that the water vapor supply pipe was changed to a pipe having a pipe diameter of 1 mm and a 300-mesh wire gauze attached to the tip (opening diameter of water vapor supply opening: 0.05 mm).

<Example 3>

The deodorization treatment was performed in the same manner as in Example 1, except that the water vapor supply pipe was changed to a pipe having a pipe diameter of 1 mm and a 50-mesh wire gauze attached to the tip (opening diameter of water vapor supply opening: 0.3 mm).

<Example 4>

The deodorization treatment was performed in the same manner as in Example 1, except that the water vapor supply pipe was changed to a pipe having a pipe diameter of 1 mm and a 30-mesh wire gauze attached to the tip (opening diameter of water vapor supply opening: 0.5 mm).

<Example 5>

The deodorization treatment was performed in the same manner as in Example 4, except that the water vapor supply pipe was changed to a pipe having a pipe diameter of 4 mm (opening diameter of water vapor supply opening: 4 mm without attachment of a wire gauze).

<Example 6>

The deodorization treatment was performed in the same manner as in Example 1 except that the treatment time was changed from 5 hours to 3 hours.

<Examples 7 to 10>

The deodorization treatment was performed in the same manner as in Example 1, except that the feed rate of pressurized water vapor was changed as listed in Tables 1 and 2.

<Examples 11, 12, 14, and 15>

The deodorization treatment was performed in the same manner as in Example 1, except that the pH during the deodorization treatment was changed as listed in Table 2.

<Example 13>

The deodorization treatment was performed in the same manner as in Example 1, except that the pH was not adjusted before the deodorization treatment or 25% aqueous ammonia was not added during the deodorization treatment.

<Example 16>

A heat treatment vessel equipped with an agitator, a thermometer, and a condenser (internal volume: 5 L) was charged with 3000 g of the aqueous polymer emulsion (A) obtained in Production Method 1, and the solution temperature was raised to 55°C under stirring with a three-retreat blade. Then, the pH was adjusted to 8 with 25% ammonia water. On the other hand, the aqueous polymer emulsion (A) was continuously supplied from the heat treatment vessel at a feed rate of 3.3 g/min to a cylindrical deodorization treatment vessel (inner diameter: 200 mm) equipped with an agitator, a thermometer, a condenser, a water vapor supply pipe, and an exhaust pipe. The water vapor supply pipe was a pipe having a pipe diameter of 1 mm, and in a state where a 100-mesh (mesh size: 0.154 mm) wire gauze was attached to the tip of the pipe, the end of the pipe on the side to which the wire gauze was attached was inserted from the upper part of the deodorization treatment vessel. A water vapor supply opening was positioned in the vicinity of the stirring blade (on the side of the stirring blade having a blade diameter of 90 mm at a position where the distance D4 from the outer edge of the stirring blade was 10 mm and at the water vapor supply opening was below the upper surface of the stirring blade) (see Figure 2). Note that the supply opening 14 in Figure 2 corresponds to a water vapor supply opening. The opening diameter of the water vapor supply opening corresponds to the mesh size of the wire gauze, which is 0.154 mm.

When the solution amount in the deodorization treatment vessel reached 100 g (0.5 hours after the start of supply), stirring was started. When the solution amount in the deodorization treatment vessel reached 500 g (2.5 hours after the start of supply), pressurized water vapor at a pressure of 0.2 MPa was blown into the solution through the water vapor supply pipe at a feed rate of 0.1 part/min per 100 parts of the aqueous polymer emulsion (A), while the pressure in the flask was reduced to 15 KPa by evacuating the water vapor in the system through an exhaust pipe using an exhaust pump to keep water in the system boiling. When the solution amount in the deodorization treatment vessel reached 1000 g (5 hours after the start of supply), the liquid (emulsion) in an amount equal to the amount of the aqueous polymer emulsion (A) supplied was extracted to the outside of the system, and the deodorization treatment was continuously performed. Note that 25% ammonia water was added as appropriate during the deodorization treatment to maintain pH in the range of 7 to 9.

<Examples 17 to 24>

The deodorization treatment was performed in the same manner as in Example 1, except that the pressure in the vessel, the temperature in the vessel, and the position of the water vapor supply opening during the deodorization treatment were changed as listed in Table 3.

<Example 25>

A water vapor supply pipe and an exhaust pipe were attached to a reaction vessel (inner diameter: 1200 mm) containing the aqueous polymer emulsion (A) obtained in Production Example 1, and the solution temperature was raised to 55°C. The water vapor supply pipe was a pipe having a pipe diameter of 50 mm, and a flat plate with 30 holes of Φ1 was attached to the tip of the pipe, the end of the pipe on the side to which the flat plate was attached was inserted from the bottom of the deodorization treatment vessel. A water vapor supply opening was positioned in the vicinity of the stirring blade (at a position below the stirring blade having a blade diameter of 680 mm with a distance D3 of 150 mm from the lower end of the stirring blade, and at a position where the stirring blade and the water vapor supply opening overlap when viewed from above to below the stirring blade) (see Figure 1). As the stirring blade, a three-retreat blade was used. Note that the opening diameter of the water vapor supply opening corresponds to the diameter of the hole provided in the flat plate, which is 1 mm.

Subsequently, the pH was adjusted to 8 with 25% ammonia water under stirring. While pressurized water vapor at a pressure of 0.2 MPa was then blown into the solution at a rate of 0.1 part/min per 100 parts of the aqueous polymer emulsion (A), the pressure in the treatment vessel was reduced to 15 KPa by evacuating the water vapor in the system with an exhaust pump to keep water in the system boiling. 25% ammonia water was added as appropriate during the deodorization treatment to maintain the pH in the range of 7 to 9. In total, 30 parts of water vapor were supplied by blowing pressurized water vapor over 5 hours.

<Comparative Example 1>

The deodorization treatment was performed in the same manner as in Example 1, except that the pressure in the vessel during the deodorization treatment was changed to 20 KPa (a state where water did not boil).

<Comparative Example 2>

The deodorization treatment was performed in the same manner as in Example 1, except that no pressurized water vapor was supplied during the deodorization treatment.

<Comparative Example 3>

The deodorization treatment was performed in the same manner as in Example 1, except that the pressure in the vessel and the temperature in the vessel during the deodorization treatment were changed as listed in Table 4. However, it was stopped at 1 hour due to high foaming, making it difficult to control the vacuum.

<Comparative Example 4>

The deodorization treatment was performed in the same manner as in Example 1, except that the pressure in the vessel and the temperature in the vessel during the deodorization treatment were changed as listed in Table 4.

<Comparative Example 5>

The deodorization treatment was performed in the same manner as in Example 1, except that the water vapor supply pipe was changed to a pipe having a pipe diameter of 10 mm (opening diameter of water vapor supply opening: 10 mm without attachment of a wire gauze).

<Comparative Example 6>

The deodorization treatment was performed in the same manner as in Example 1, except that the water vapor supply pipe was changed to a pipe having a pipe diameter of 1 mm and a 400-mesh wire gauze attached to the tip (opening diameter of water vapor supply opening: 0.034 mm) .

3. Evaluation

The aqueous polymer emulsions after the deodorization treatment and the conditions during the deodorization treatment obtained in Examples 1 to 25 and Comparative Examples 1 to 6 were measured and evaluated as follows.

<Liquid Surface State in Treatment Vessel during Deodorization Treatment>

The liquid surface state during the deodorization treatment was visually evaluated.

<Evaluation Criteria>

O: Little foaming on the liquid surface and no agglomerates floated (good)
Δ: High foaming on the liquid surface but no agglomerates floated(acceptable)
x: Excessive foaming on the liquid surface making vacuum control impossible, or agglomerates floated on the liquid surface (poor)

<Agglomerate Amount>

After the deodorization treatment, 500 g of aqueous polymer emulsion was collected and filtered through a 100-mesh (mesh size: 0.154 mm) wire gauze [weight of 100-mesh wire gauze = N (g)], which had been weighed in advance. The residue on the wire gauze was rinsed with distilled water, allowed to stand in a hot air circulating dryer at 50°C for 1 day and allowed to stand at 23°C and 50% RH for 1 day. Then, the mass [M (g)] was measured together with the 100-mesh wire gauze. The amount of agglomerates in the aqueous polymer emulsion (A) after the deodorization treatment was determined by equation (4) below.

$$\text{Agglomerate amount (ppm)} = [(M - N)/500] \times 10^6 \quad (4)$$

<Degree of Contamination on Wall Surface of Treatment Vessel>

After the aqueous polymer emulsion was taken out from the treatment vessel after the deodorization treatment, the degree of contamination on the wall surface of the treatment vessel after rinsing with distilled water was visually observed and evaluated.

<Evaluation Criteria>

⊙: Agglomerates adhered to a surface portion of less than 10% of the entire surface area of the emulsion-immersed part (very good)
O: Agglomerates adhered to a surface portion of 10% or more and less than 50% of the entire surface area of the emulsion-immersed part (good)
Δ: Agglomerates adhered to a surface portion of 50% or more and less than 70% of the entire surface area of the emulsion-immersed part (acceptable)
x: Agglomerates adhered to a surface portion of 70% or more of the entire surface area of the emulsion-immersed part (poor)

<Temporal Stability>

Distilled water was added to the aqueous polymer emulsion after deodorization treatment to adjust the solid concentration to 20%. 50 g of this aqueous polymer emulsion (solid concentration: 20%) was collected in a 100 mL glass container, sealed, and allowed to stand in a hot air circulating dryer at 50°C for 7 days, and the appearance after standing at 23°C and 50% RH for 1 day was visually observed.

<Evaluation Criteria>

⊙: No change (very good)
O: Slight change such as aggregation and precipitation, which are eliminated by shaking (good)
Δ: Slight change such as aggregation and precipitation, which are not eliminated by shaking (acceptable)
x: Aggregation and precipitation(poor)

<Odor of Treatment Liquid>

In a 100 mL glass container, 80 g of aqueous polymer emulsion after deodorization treatment was collected, covered with a lid, and sealed. After standing in a hot air circulating dryer at 40°C for 1 hour, the container was immediately taken out, and the odor upon removal of the cover was evaluated by a sensory test.

<Evaluation Criteria>

⊙: Almost no odor (very good)
O: Slight odor (good)
Δ: Odor (acceptable)
x: Strong odor (poor)

<Concentration of Volatile Organic Compound Contained>

The content of volatile organic compounds (unreacted monomer and alcohol) was measured by gas chromatography (GC-2014 manufactured by Shimadzu Corporation; column: DB-1 manufactured by GL Sciences Inc.; carrier gas: nitrogen; detector: flame ionization detector), and the concentration of each of the unreacted monomer and alcohol contained was determined. In the measurement by gas chromatography, 0.5 g of emulsion, 4.0 g of ethanol, and 0.3 g of 20% aqueous calcium chloride solution were mixed and allowed to stand for 10 minutes, and the mixture was centrifuged at 12000 rpm x 10 minutes to obtain 1.5 g of supernatant, to which 0.05 g of 1% aqueous solution of ethylene glycol monomethyl acetate was added as an internal standard. This solution was used as an injection solution for gas chromatography.

Tables 1 to 4 shows evaluation results of the aqueous polymer emulsions of Examples 1 to 25 and Comparative Examples 1 to 6 with respect to the liquid surface state in the treatment vessel during the deodorization treatment, the agglomerate amount, the degree of contamination on the wall surface of the treatment vessel, the temporal stability, the odor derived from the volatile organic compound, and the concentration of the volatile organic compound contained.

[Table 1]

| | | | Examples | | | | | | | |
|---|---|---|---|---|---|---|---|---|---|---|
| | | | 1 | 2 | 3 | 3 | 5 | 6 | 7 | 8 |
| | Inner diameter (D2) of deodorization treatment vessel | [mm] | 120 | 120 | 120 | 120 | 120 | 120 | 120 | 120 |
| | Opening diameter (D1) of supply opening for pressurized water vapor | [mm] | 0.154 | 0.05 | 0.3 | 0.5 | 4 | 0.154 | 0.154 | 0.154 |
| | Ratio of inner diameter (D2) /opening diameter (D1) of supply opening | | 779 | 2667 | 364 | 240 | 30 | 779 | 779 | 779 |
| | Diameter of stirring blade | [mm] | 90 | 90 | 90 | 90 | 90 | 90 | 90 | 90 |
| | Emulsion amount in treatment vessel | [g] | 1000 | 1000 | 1000 | 1000 | 1000 | 1000 | 1000 | 1000 |
| | Temperature in vessel during deodorization treatment | [°C] | 55 | 55 | 55 | 55 | 55 | 55 | 55 | 55 |
| | Pressure in vessel during deodorization treatment | [KPa] | 15 | 15 | 15 | 15 | 15 | 15 | 15 | 15 |
| | Treatment method | [-] | Batch type | Batch type | Batch type | Batch type | Batch type | Batch type | Batch type | Batch type |
| | Treatment time | [hr] | 5 | 5 | 5 | 5 | 5 | 3 | 5 | 5 |
| | Position of water vapor supply pipe | | 20 mm below blade | 20 mm below blade | 20 mm below blade | 20 mm below blade | 20 mm below blade | 20 mm below blade | 20 mm below blade | 20 mm below blade |
| | Feed rate of pressurized water vapor | [g/min] | 1 | 1 | 1 | 1 | 1 | 1 | 2 | 9 |
| | Feed rate of emulsion before treatment | [g/min] | - | - | - | - | - | - | - | - |
| | Amount of pressurized water vapor per 100 parts by mass of emulsion | [parts] | 30 | 30 | 30 | 30 | 30 | 18 | 60 | 120 |
| | Mean residence time of emulsion in tank | [$h_r$] | - | - | - | - | - | - | - | - |
| | pH during deodorization treatment (adjusted with ammonia water) | [-] | 7-9 | 7-9 | 7-9 | 7-9 | 7-9 | 7-9 | 7 9 | 7-9 |

(continued)

| | | | Examples | | | | | | | |
| --- | --- | --- | --- | --- | --- | --- | --- | --- | --- | --- |
| | | | 1 | 2 | 3 | 3 | 5 | 6 | 7 | 8 |
| Evaluation | Liquid surface state in vessel during water vapor treatment | [-] | ○ | ○ | ○ | ○ | ○ | ○ | ○ | Δ |
| | Agglomerate amount | [ppm] | 12 | 18 | 32 | 162 | 917 | 12 | 53 | 572 |
| | Degree of contamination on wall surface of treatment vessel | [-] | ⊙ | ⊙ | ⊙ | ⊙ | ⊙ | ⊙ | ⊙ | O |
| | Temporal stability | [-] | ⊙ | ⊙ | ⊙ | ○ | ○ | ⊙ | ⊙ | ○ |
| | Odor of treatment liquid | [-] | ⊙ | ⊙ | ⊙ | ⊙ | ○ | Δ | ⊙ | ⊙ |
| | of volatile organic compound | Total | [ppm] | 15 | 11 | 20 | 95 | 223 | 340 | 2 | 7 |
| | | Monomer | [ppm] | 10 | 7 | 14 | 68 | 156 | 233 | 0 | 5 |
| | | Alcohol | [ppm] | 5 | 9 | 6 | 27 | 67 | 107 | 2 | 2 |

[Table 2]

| | | Examples | | | | | | | |
|---|---|---|---|---|---|---|---|---|---|
| | | 9 | 10 | 11 | 12 | 13 | 14 | 15 | 16 |
| Inner diameter (D2) of deodorization treatment vessel | [mm] | 120 | 120 | 120 | 120 | 120 | 120 | 120 | 120 |
| Opening diameter (D1) of supply opening for pressurized water vapor | [mm] | 0.154 | 0.159 | 0.154 | 0.154 | 0.154 | 0.159 | 0.154 | 0.159 |
| Ratio of inner diameter (D2)/opening diameter (D1) of supply opening | | 779 | 779 | 779 | 779 | 779 | 779 | 779 | 779 |
| Diameter of stirring blade | [mm] | 90 | 90 | 90 | 90 | 90 | 90 | 90 | 90 |
| Emulsion amount in treatment vessel | [g] | 1000 | 1000 | 1000 | 1000 | 1000 | 1000 | 1000 | 1000 |
| Temperature in vessel during deodorization treatment | [°C] | 55 | 55 | 55 | 55 | 55 | 55 | 55 | 55 |
| Pressure in vessel during deodorization treatment | [KPa] | 15 | 15 | 15 | 15 | 15 | 15 | 15 | 15 |
| Treatment method | [-] | Batch type | Batch type | Batch type | Batch type | Batch type | Batch type | Batch type | Continuous type |
| Treatment time | [hr] | 5 | 5 | 5 | 5 | 5 | 5 | 5 | - |
| Position of water vapor supply pipe | | 20 mm below blade | 20 mm below blade | 20 mm below blade | 20 mm below blade | 20 mm below blade | 20 mm below blade | 20 mm below blade | 10 mm beside blade |
| Feed rate of pressurized water vapor | [g/min] | 0.1 | 0.5 | 1 | 1 | 1 | 1 | 1 | 1 |
| Feed rate of emulsion before treatment | [g/min] | - | - | - | - | - | - | - | 33 |
| Amount of pressurized water vapor per 100 parts by mass of emulsion | [parts] | 3 | 15 | 30 | 30 | 30 | 0 | 30 | 30 |
| Mean residence time of emulsion in tank | [hr] | - | - | - | - | - | - | - | 5 |
| pH during deodorization treatment (adjusted with ammonia water) | [-] | 7-9 | 7-9 | 5-7 | 6-8 | 21 constant | 8~10 | 10 or more | 7-9 |

(continued)

| Evaluation | | | | 9 | 10 | 11 | 12 | 13 | 14 | 15 | 16 |
|---|---|---|---|---|---|---|---|---|---|---|---|
| | | | | Examples | | | | | | | |
| | Liquid surface state in vessel during water vapor treatment | | [-] | ○ | ○ | ○ | ○ | ○ | ○ | ○ | ○ |
| | Agglomerate amount | | [ppm] | 23 | 19 | 273 | 152 | 656 | 25 | 31 | 37 |
| | Degree of contamination on wall surface of treatment vessel | | [-] | ⊙ | ⊙ | ○ | ⊙ | ○ | ⊙ | ⊙ | ⊙ |
| | Temporal stability | | [-] | ⊙ | ⊙ | ⊙ | ⊙ | ○ | ⊙ | ⊙ | ⊙ |
| | Odor of treatment liquid | | [-] | Δ | ⊙ | ⊙ | ⊙ | ⊙ | ⊙ | Δ | ⊙ |
| | Concentration of volatile organic compound | Total | [ppm] | 584 | 70 | 47 | 45 | 42 | 46 | 83 | 42 |
| | | Monomer | [ppm] | 426 | 48 | 33 | 29 | 31 | 15 | 14 | 28 |
| | | Alcohol | [ppm] | 158 | 22 | 14 | 16 | 11 | 31 | 69 | 14 |

[Table 3]

| | | | Examples | | | | | | | | |
|---|---|---|---|---|---|---|---|---|---|---|---|
| | | | 17 | 18 | 19 | 20 | 21 | 22 | 23 | 24 | 25 |
| | Inner diameter (D2) of deodorization treatment vessel | [mm] | 120 | 120 | 120 | 120 | 120 | 120 | 120 | 120 | 1200 |
| | Opening diameter (D1) of supply opening for pressurized water vapor | [mm] | 0.154 | 0.154 | 0.154 | 0. 154 | 0.154 | 0.154 | 0.154 | 0.154 | 1 |
| | Ratio of inner diameter (D2) /opening diameter (D1) of supply opening | | 779 | 779 | 779 | 779 | 779 | 779 | 779 | 779 | 1200 |
| | Diameter of stirring blade | [mm] | 90 | 90 | 90 | 90 | 90 | 90 | 90 | 90 | 680 |
| | Emulsion amount in treatment vessel | [g] | 1000 | 1000 | 1000 | 1000 | 1000 | 1000 | 1000 | 1000 | 5-10, |
| | Temperature in vessel during deodorization treatment | [°C] | 50 | 60 | 80 | 85 | 90 | 85 | 55 | 55 | 55 |
| | Pressure in vessel during deodorization treatment | [KPa] | 12 | 20 | 40 | 30 | 40 | 55 | 15 | 15 | 15 |
| | Treatment method | [-] | Batch type | Batch type | Batch type | Batch type | Batch type | Batch type | Batch type | Batch type | Batch type |
| | Treatment time | [hr] | 5 | 5 | 5 | 5 | 5 | 5 | 5 | 5 | 5 |
| | Position of water vapor supply pipe | | 20 mm below blade | 20 mm below blade | 20 mm below blade | 20 mm below blade | 20 mm below blade | 20 mm below blade | 30 mm diagonally above blade (vicinity of wall surface of flask) | 30 mm just above blade (vicinity of stirring shaft) | 150 mm below blade |
| | Feed rate of pressurized water vapor | [g/min] | 1 | 1 | 1 | 1 | 1 | 1 | 1 | 1 | 500 |
| | Feed rate of emulsion before treatment | [g/min] | - | - | - | - | - | - | - | - | - |
| | Amount of pressurized water vapor per 100 parts by mass of emulsion | [parts] | 30 | 30 | 30 | 30 | 30 | 30 | 30 | 30 | 30 |

(continued)

| | | | Examples | | | | | | | | |
|---|---|---|---|---|---|---|---|---|---|---|---|
| | | | 17 | 18 | 19 | 20 | 21 | 22 | 23 | 24 | 25 |
| | Mean residence time of emulsion in tank | [hr] | - | - | - | - | - | - | - | - | - |
| | pH during deodorization treatment (adjusted with ammonia water) | [-] | 7-9 | 7-9 | 7-9 | 7-9 | 7-9 | 7-9 | 7-9 | 7-9 | 7-9 |
| Evaluation | Liquid surface state in vessel during water vapor treatment | [-] | ○ | ○ | ○ | ○ | ○ | ○ | ○ | ○ | ○ |
| | Agglomerate amount | [ppm] | <10 | 40 | 61 | 311 | 775 | 377 | 14 | 18 | 57 |
| | Degree of contamination on wall surface of treatment vessel | [-] | ⊙ | ⊙ | ⊙ | ○ | ○ | ○ | ⊙ | ⊙ | ⊙ |
| | Temporal stability | [-] | ⊙ | ⊙ | ⊙ | ⊙ | ○ | ⊙ | ⊙ | ⊙ | ⊙ |
| | Odor of treatment liquid | [-] | ⊙ | ⊙ | ⊙ | ○ | ○ | ○ | ⊙ | ⊙ | ⊙ |
| | Concentration of volatile organic compound — Total | [ppm] | 14 | 26 | 33 | 47 | 128 | 116 | 66 | 94 | 42 |
| | Concentration of volatile organic compound — Monomer | [ppm] | 10 | 19 | 22 | 21 | 16 | 69 | 41 | 67 | 29 |
| | Concentration of volatile organic compound — Alcohol | [ppm] | 4 | 7 | 11 | 26 | 112 | 47 | 25 | 27 | 13 |

[Table 4]

| | | | Comparative Examples | | | | | |
|---|---|---|---|---|---|---|---|---|
| | | | 1 | 2 | 3 | 4 | 5 | 6 |
| | Inner diameter (D2) of deodorization treatment vessel | [mm] | 120 | 120 | 120 | 120 | 120 | 120 |
| | Opening diameter (D1) of supply opening for pressurized water vapor | [mm] | 0.154 | 0.154 | 0.154 | 0.154 | 10 | 0.034 |
| | Ratio of inner diameter (D2)/opening diameter (D1) of supply opening | | 779 | 779 | 779 | 779 | 12 | 3529 |
| | Diameter of stirring blade | [mm] | 90 | 90 | 90 | 90 | 90 | 90 |
| | Emulsion amount in treatment vessel | [g] | 1000 | 1000 | 1000 | 1000 | 1000 | 1000 |
| | Temperature in vessel during deodorization treatment | [°C] | 55 | 55 | 45 | 95 | 55 | 55 |
| | Pressure in vessel during deodorization treatment | [KPa] | 20 | 15 | 10 | 40 | 15 | 15 |
| | Treatment method | [-] | Batch type | Batch type | Batch type | Batch type | Batch type | Batch type |
| | Treatment time | [hr] | 5 | 5 | 1 | 5 | 5 | 5 |
| | Position of water vapor supply pipe | | 20 mm below blade | 20 mm below blade | 20 mm below blade | 20 mm below blade | 20 mm below blade | 20 mm below blade |
| | Feed rate of pressurized water vapor | [g/min] | 1 | - | 1 | 1 | 1 | 1 |
| | Feed rate of emulsion before treatment | [g/min] | - | - | - | - | - | - |
| | Amount of pressurized water vapor per 100 parts by mass of emulsion | [parts] | 30 | - | 6 | 30 | 30 | 30 |
| | Mean residence time of emulsion in tank | [$h_r$] | - | - | - | - | - | - |
| | pH during deodorization treatment (adjusted with ammonia water) | [-] | 7-9 | 7-9 | 7-9 | 7-9 | 7 9 | 7-9 |

EP 4 227 326 A1

| Evaluation | | | | Comparative Examples | | | | | |
|---|---|---|---|---|---|---|---|---|---|
| | | | | 1 | 2 | 3 | 4 | 5 | 6 |
| | Liquid surface state in vessel during water vapor treatment | | [-] | ○ | ○ | × difficult to control vacuum | × coating generated | × agglomerates floated | Δ foaming |
| | Agglomerate amount | | [ppm] | 14 | 22 | Not evaluated | 3971 | 5891 | 2074 |
| | Degree of contamination on wall surface of treatment vessel | | [-] | ⊙ | ⊙ | | × | Δ | x |
| | Temporal stability | | [-] | ○ | ○ | | Δ | × | ⊙ |
| | Odor of treatment liquid | | [-] | × | × | | × | ○ | ⊙ |
| | concentration of volatile organic compound | Total | [ppm] | 960 | 992 | | 846 | 251 | 24 |
| | | Monomer | [ppm] | 656 | 661 | | 572 | 175 | 17 |
| | | Alcohol | [ppm] | 304 | 331 | | 274 | 76 | 7 |

EP 4 227 326 A1

As apparent from the results in Tables 1 to 4, it was found that according to Examples 1 to 25 in which the deodorization treatment was performed in this production method, a low-odor aqueous polymer emulsion in which the volatile organic compounds in the aqueous polymer emulsion were reduced to trace amounts could be easily obtained using a general-purpose apparatus in which pressure could be reduced, at a relatively low temperature in a short time. In addition, it was revealed that the aqueous polymer emulsion obtained by this production method has excellent temporal stability and is unlikely to deteriorate in quality even after long-term storage. Furthermore, it can be concluded that Examples 1 to 25 have excellent temperature control in the treatment vessel and productivity as there is little contamination on the wall surface inside the vessel during and after deodorization treatment.

Meanwhile, Comparative Examples 1 and 2 had insufficient reduction of volatile organic compounds in the emulsion. In Comparative Example 3, the pressure in the vessel was as low as 10 KPa, there was much foaming when pressurized water vapor was blown in, making it difficult to control the vacuum. In Comparative Example 4, since the temperature in the vessel was as high as 95°C, there were many agglomerates due to emulsion coating. Since the temporal ability was also reduced due to the excessive thermal history to the emulsion, temporal stability also decreased. In Comparative Example 5, many agglomerates of polymer particles were generated. In Comparative Example 6, the ratio D2/D1 was large, bubbles of pressurized water vapor became too fine and foamed from the liquid surface, and fouling of the wall surface of the treatment vessel occurred.

Although the present disclosure has been described according to Examples, it is understood that the present disclosure is not limited to the Examples. The present disclosure is intended to cover various modification examples and modifications within the range of equivalency. In addition, various combinations and forms, as well as other combinations and forms including only one element, more, or less thereof are within the spirit and scope of the present disclosure.

## Claims

1. A method of producing a low-odor emulsion, the method comprising the steps of:

    charging an aqueous polymer emulsion into a treatment vessel, in which pressure can be reduced, and supplying pressurized water vapor into the treatment vessel through a supply passage, while maintaining the inside of the treatment vessel in a state where water is boiled by bringing temperature of the aqueous polymer emulsion into a range of 50°C to 90°C and pressure in the treatment vessel into 12 KPa to 57 KPa; and
    discharging water vapor in a gas phase part in the treatment vessel and a volatile organic compound volatilized from the aqueous polymer emulsion to outside of a system,
    wherein a ratio of an inner diameter of the treatment vessel to an opening diameter of a supply opening for supplying the pressurized water vapor from the supply passage into the treatment vessel is from 30 to 3000 for the inner diameter of the treatment vessel relative to 1 for the opening diameter of the supply opening.

2. The method according to claim 1, wherein a proportion of an amount of the aqueous polymer emulsion to a total amount of the pressurized water vapor supplied into the treatment vessel is from 5 to 100 parts by mass of the pressurized water vapor per 100 parts by mass of the aqueous polymer emulsion.

3. The method according to claim 1 or 2, wherein a concentration of the volatile organic compound in the low-odor emulsion is 300 ppm or less.

4. The method according to any one of claims 1 to 3, wherein the pressurized water vapor is supplied, while maintaining pH of the aqueous polymer emulsion in a range of 5 to 10.

5. The method according to any one of claims 1 to 4, wherein the ratio of the inner diameter of the treatment vessel to the opening diameter of the supply opening is from 350 to 3000 for the inner diameter of the treatment vessel relative to 1 for the opening diameter of the supply opening.

6. The method according to any one of claims 1 to 5, wherein the treatment vessel is equipped with an agitator inside, and the supply opening is positioned in the vicinity of a stirring blade in the agitator.

7. The method according to any one of claims 1 to 6, wherein a concentration of the volatile organic compound in the low-odor emulsion is 100 ppm or less.

8. The method according to any one of claims 1 to 7, wherein an alcohol concentration in the low-odor emulsion is 100 ppm or less.

FIG. 1

# FIG. 2

EP 4 227 326 A1

FIG. 3

15

14

D1

25

FIG. 4

## INTERNATIONAL SEARCH REPORT

International application No.

**PCT/JP2021/036678**

**A. CLASSIFICATION OF SUBJECT MATTER**

*C08F 6/16*(2006.01)i; *C08F 220/10*(2006.01)i
FI: C08F6/16; C08F220/10

According to International Patent Classification (IPC) or to both national classification and IPC

**B. FIELDS SEARCHED**

Minimum documentation searched (classification system followed by classification symbols)

C08F6/00-246/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-077221 A (TOAGOSEI CO LTD) 29 March 2007 (2007-03-29)<br>claims 1-9, paragraph [0015], examples | 1-8 |
| A | JP 2006-199840 A (TOAGOSEI CO LTD) 03 August 2006 (2006-08-03)<br>claims 1-4, paragraph [0009], examples | 1-8 |
| A | JP 2017-137399 A (NIPPON ZEON CO) 10 August 2017 (2017-08-10)<br>claims 1-3, examples | 1-8 |
| A | JP 2002-060415 A (YAYOI CHEMICAL INDUSTRY CO LTD) 26 February 2002<br>(2002-02-26)<br>claims 1-4, examples | 1-8 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/036678**

| Patent document cited in search report | | | Publication date (day/month/year) | Patent family member(s) | Publication date (day/month/year) |
|---|---|---|---|---|---|
| JP | 2007-077221 | A | 29 March 2007 | (Family: none) | |
| JP | 2006-199840 | A | 03 August 2006 | (Family: none) | |
| JP | 2017-137399 | A | 10 August 2017 | (Family: none) | |
| JP | 2002-060415 | A | 26 February 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020171389 A
- JP 2002060415 A
- JP 2002212207 A
- JP 58213003 A
- JP 53041387 A